# EUROPEAN PATENT SPECIFICATION

(11) **EP 2 031 194 B1**
(45) Date of publication and mention of the grant of the patent: **24.02.2016**
(21) Application number: 07016868.7
(22) Date of filing: 28.08.2007
(51) Int. Cl.: F01L 1/047, F01L 1/08

(54) **Assembled camshaft for exhaust gas recirculation system**
Gebaute Nockenwelle für ein Abgasrückführsystem
Arbre à cames assemblé pour système de recirculation de gaz d'échappement

(43) Date of publication of application: 04.03.2009
(73) Proprietor: Perkins Engines Company Limited, Peterborough, PE1 5NA (GB)
(72) Inventor: Wotherspoon, James, Peterborough PE1 5NA (GB); Ellero, Michael, Peterborough PE1 5NA (GB)
(74) Representative: Kramer Barske Schmidtchen Patentanwälte PartG mbB

(56) References cited:
- DE-A1- 10 216 767
- DE-A1- 10 337 430
- DE-A1-102005 015 852
- GB-A- 2 385 888

## Description

### Technical Field

The present disclosure relates to an assembled camshaft and, more particularly, to a cam-driven, internal exhaust gas recirculation system assembly for use with an internal combustion engine. Furthermore, the present disclosure relates to a method for manufacturing a camshaft configured to be used in combination with a cam-driven, internal exhaust gas circulation system assembly.

### Background

An internal combustion engine typically includes one or more camshafts for controlling a variety of types of valves and injectors. More particularly, a camshaft may include one or more cam lobes for driving rocker arms that actuate valves and injectors associated with a plurality of combustion cylinders. In addition, one or more cam lobes on such a camshaft may be used to activate or deactivate a switchable internal EGR (exhaust gas recirculation) system of an engine. For example, "tri-lobe" camshafts are known for this activation and deactivation purpose and work together with a cam follower of the internal EGR system. Such an internal EGR system may include an internal EGR switch button integrated in a cam follower. When this internal EGR switch button is in a locked position, the follower will follow the cam lobe associated herewith. When the internal EGR system switch button is in an unlocked position, the switch button will ride freely over the associated cam lobe without moving the rest of the follower. In the unlocked phase, only the outer cam lobes cause the follower to move. A third cam lobe is disposed between the outer cam lobes and may contact the switch button of the internal EGR system.

The contour of the outer surface of the cam lobes of such a camshaft have to be very precise and accurate so that the cam follower always maintains contact and will move exactly as predetermined by the contour of the outer surface of the associated cam lobe.

In order to obtain an accurate and precisely formed outer surface of the cam lobes, the cam lobes have to be machined or ground. However, if two or more cam lobes exist very close side by side on a camshaft, such a grinding operation may be problematic due to the fact that the grinding procedure requires the cam lobes to have a predetermined width and to be separated by a given distance. These circumstances may require the part of the camshaft, on which the two or more cam lobes are located to have a minimum length. Furthermore, the entire assembly, if it is used in combination with a cam follower including an internal EGR switch button as described above, may have a relatively large size and dimensions.

In DE 32 12 663 A1, a camshaft is disclosed which makes it possible to obtain a different valve opening/closing time adapted for each rotational speed. This known camshaft comprises a hollow outer camshaft and an inner camshaft arranged coaxially in the hollow interior of the outer camshaft. The inner camshaft has a longitudinal slot for supporting a separate cam lobe which extends beyond the outer camshaft. The connection between the separate cam lobe and the inner camshaft is formed as a dovetail joint. Such a connection may be relatively complicate and may result to higher manufacturing costs.

A further camshaft for internal combustion engines is disclosed in US 5,431,131. This known camshaft includes a cylindrical shaft which can be inserted into bearing bores and into cam lobes arranged between in a single operation, so that undivided bearings of relatively small diameters can be used. The cam lobes are affixed to the shaft so as to rotate therewith by pinch-fitting or clamping them on the shaft. Transverse screw couplings effected by means of tensionally-stressed clamping screws may improve the fixed coupling between the cam lobes and both a conic sleeve and shaft. The screw couplings are designed in a manner such that no additional installation space is needed as compared to conventional camshafts and the assembly can be performed using only standard tools. However, the integrity of this camshaft may be weakened by the required through-hole. Furthermore, such a separate cam lobe attachment technique appears to be possible only for cam lobes having a through-hole into which the camshaft is inserted.

In DE 44 01 011 C2, an assembled camshaft having a cam lobe covering less than 180 degrees of the shaft circumference is disclosed. This assembled camshaft includes a hollow shaft having a through-hole extending from one side of the outer circumference to the opposite side of the outer circumference of the hollow shaft. A separate cam lobe has a mounting projection which extends through one part of the through-hole. A tool is inserted through the other part of the through-hole in the hollow shaft so that the free end of the mounting protection of the separate cam shaft can be flattened like a rivet in order to secure the separate cam lobe on the hollow cam shaft. Such a fastening, however, may be not appropriate and strong enough and it also requires a hollow shaft. In addition, it appears difficult to exchange the separate cam lobe with a replacement cam lobe.

An assembled camshaft which is very similar to the above DE 44 01 011 C2 is disclosed in DE 101 29 419 A1. Here, the separate cam lobes are secured on a hollow shaft by rivets. Therefore, the separate cam lobes must have a through-hole into which the hollow camshaft is inserted. The rivet is located on the opposite side of the operational outer surface of the cam lobe.

A camshaft having separate cam lobes is also known from DE 44 13 390 A1. Here, the camshaft is provided with blind holes into which corresponding cam lobes are inserted by press fitting. This known arrangement may be problematic with respect to the accuracy of the position of the cam lobes. Furthermore, replacement of individual cam lobes might be difficult.

DE 102 16 767 A1 discloses an assembled camshaft comprising a hollow shaft and cam lobes each having a through-hole into which the hollow shaft is inserted. Screws secure each separate cam lobe on the hollow shaft. In order to permit the position of the separate cam lobes to be adjusted relative to the hollow shaft, a through-hole has a greater diameter than the screw inserted therein. Consequently, play is provided for rotating the cam lobe on the hollow cam shaft. A grub screw is used to fix the adjusted position of the cam lobe on the hollow camshaft. Similar the above assembled camshafts, this known assembled camshaft requires a cam lobe having a through-hole into which a shaft is inserted. Otherwise the mounting of the cam lobe is not possible.

A camshaft assembly and methods of making a camshaft assembly are disclosed in US 6,718,924 B1. Each of the cam lobes includes a lobe boss portion that defines the cam lift profile and a base portion that provides a surface for joining the cam lobe to the shaft. In contrast to conventional ring-type cams, this base portion of the cam does not circumscribe the outer surface of the shaft, but instead extends only part way around the circumference or periphery of the shaft. This design allows for radial mounting of the cams at virtually any timing angle, and permits the use of simple techniques for joining the cams to the shaft, including capacitance discharge welding. However, this design does not allow a cam lobe to be replaced.

A very similar design is disclosed in DE 10 2005 041 742 A1, in which a separate cam lobe includes a hollow shaft having slots formed therein. Cam lobes are inserted into these slots and are secured by welding. Thereafter, the cam lobs are ground and finished. Again, replacement of the cam lobes is not possible and furthermore, due to the fact that the separate cam lobes are non-detachably connected together, the space for grinding can not be reduced.

DE 103 37 430 A1 disclosed a contoured body having an additional cam contour for effecting a valve control of a piston combustion engine that is used, in particular, for an internal exhaust gas recirculation system. Here, a cam lobe having the additional cam contour is movably fitted in a hole of a camshaft. This assembly is focused on movably fitted cam lobes and accordingly it may be expensive to manufacture.

In DE 79 20 957 U1 a camshaft is disclosed on which cam lobes having a through-hole are slit on. In one embodiment, a grub screw is used to secure the cam lobe on the camshaft. Obviously, this known assembly is limited to cam lobes surrounding the outer circumference of the camshaft and, therefore, a change of individual cam lobes may be quit complex.

Finally, a cam-driven exhaust gas recirculation valve assembly is disclosed in WO 99/31374. Here, an engine assembly includes an exhaust gas recirculation mechanism and an internal combustion engine having an engine air inlet and an engine exhaust outlet. The engine assembly further includes a valve assembly which includes a valve housing having a housing inlet and a housing outlet. The valve assembly is positionable between a first valve position and a second valve position. Further, the engine exhaust outlet is in fluid communication with the housing inlet via a first conduit and the engine air inlet is in fluid communication with the housing outlet via a second conduit. The engine assembly further includes a camshaft having a cam member secured thereto. As the camshaft rotates, a tri-lobe cam member is moved into a second cam member position, in which an EGR spring urges a valve member in a direction that positions the valve member in a second valve position. In the second valve position, the valve member blocks the flow of exhaust gas between the exhaust manifold and the intake manifold. It is generally disclosed that a cam member is secured to the camshaft. However, no details are disclosed with respect to the kind of securing of the cam member. Consequently, a person skilled in the art would assume that this cam member is secured to the camshaft in one of the above-identified manners.
In GB-A-2 385 888 a camshaft assembly according to the preamble of claim 1 is disclosed. However, that known camshaft assembly has selectively slideable cam lobes. Each slideable cam lobe is capable of latching in two positions perpendicular to a main axis of the camshaft. The slideable cam lobe is either latched to provide the controlling valve lift or the slideable lobe is withdrawn within the lift curve of a pair of adjacent cams, so that the latter cam lobe controls the valve lift.

The present disclosure is directed to overcoming one or more of the problems as set forth above.

### Summary of the Disclosure

According to one exemplary aspect of the present disclosure, an assembled camshaft according to the preamble of claim 1 is characterized in that the aperture has a a flat bottom wall with a mounting hole extending from said flat bottom wall. A hole extends from the outer circumference of the shaft body to the mounting hole. A mechanical lock is configured to be arranged in said hole while urging against said mounting projection to releasably fix the mounting projection in the mounting hole so that the second cam lobe is replaceable while still being correctly positioned in its operating position. The mechanical lock is one of the group consisting of a spring dowel, grub screw, and a cap head screw.

According to yet another aspect of the disclosure, a method for manufacturing an assembled camshaft may comprise the following method steps. In this method, a camshaft is formed with an integral first cam member that is configured to be contacted by a first cam follower. A slot is then formed in an outer surface of the cam member such that the slot extends transversely to a rotational axis of said camshaft, the slot having a predetermined width and a flat bottom wall. A mounting hole is formed within the slot such that the mounting

hole extends from the flat bottom wall radially. A second hole is formed so it extends from an outer surface of the camshaft to the mounting hole. The first cam member is ground so its cam lobe surface assumes a desired shape. A second separate cam member having a mounting projection is formed with a width corresponding to the width of the slot and the mounting projection fits into the mounting hole. The separate cam member is ground such that its cam lobe surface assumes the desired shape. The separate cam member is then inserted in the slot such that the mounting projection is located in the mounting hole. A mechanical lock is inserted in the second hole such that it fixes the mounting projection within the mounting hole such that the second cam member is replaceable while still being correctly positioned in its fixed operating position. The mechanical lock is one of the group consisting of a spring dowel, grub screw, and a cap head screw.

It is to be understood that both the foregoing general description and the following detailed description are exemplary and explanatory only and are not restrictive of the disclosure.

Other features and aspects of this disclosure will be apparent to the skilled person based upon the following description, the accompanying drawings and the attached claims.

### Brief Description of the Drawings

The accompanying drawings, which are incorporated in and constitute a part of the specification, illustrates several exemplary embodiments of the disclosure and, together with the description, serve to explain the principles of the disclosure. In the drawings,
Fig. 1 is a perspective view of an internal combustion engine which incorporates the features of the present disclosure therein;
Fig. 2 is partial cross sectional view of the internal combustion engine taken along line 2-2 of Fig. 1 as viewed in the direction of the arrows;
Fig. 3 is a diagrammatic sectional view of a part of a cam-driven internal exhausted gas recirculation system assembly in accordance with the disclosure;
Fig. 4 is a lateral view of the assembled camshaft as used in the cam-driven internal exhausted gas recirculation system assembly of Fig. 3;
Fig. 5 is a diagrammatic sectional view of the exemplary assembled camshaft of Fig. 4;
Fig. 6 is a lateral view of the exemplary camshaft of Fig. 4 before insertion of a separate cam lobe;
Fig. 7 is a sectional view of the exemplary camshaft taken along line A-A of Fig. 6;
Fig. 8 is a perspective view of the exemplary camshaft of Figs. 4 and 5;
Fig. 9 is another perspective view of the exemplary camshaft of Figs. 4 and 5;
Fig. 10 is a perspective view of the camshaft of Fig. 6 and 7 before insertion of the separate cam lobe;
Fig. 11 is a perspective view of an exemplary cam lobe to be used in combination with the camshaft of Figs. 3-10;
Fig. 12 is a diagrammatic perspective sectional view of another exemplary embodiment of a camshaft in accordance with the disclosure;
Fig. 13 is a diagrammatic sectional view of the cam-driven internal exhausted gas recirculation system assembly of Figs. 3 and 14 taken along the line T-T of Fig. 14, wherein the EGR system and a secondary lobe are active;
Fig. 14 is a diagrammatic sectional view of the cam-driven internal exhausted gas recirculation system assembly of Figs. 3 and 13 taken along the line Y-Y of Fig. 13;
Fig. 15 is a diagrammatic sectional view of the cam-driven internal exhausted gas recirculation system assembly of Figs. 3 and 16 taken along the line T-T of Fig. 16, wherein the EGR system and a secondary lobe are inactive;
Fig. 16 is a diagrammatic sectional view of the cam-driven internal exhausted gas recirculation system assembly of Figs. 3 and 15 taken along the line Y-Y of Fig. 15;
Fig. 17 is a diagrammatic sectional view of the cam-driven internal exhausted gas recirculation system assembly of Figs. 3 and 18 taken along the line T-T of Fig. 18, wherein the EGR system is active or inactive and the cam lobe is away from the cam follower;
Fig. 18 is a diagrammatic sectional view of the cam-driven internal exhausted gas recirculation system assembly of Figs. 3 and 17 taken along the line Y-Y of Fig. 17;
Fig. 19 is a diagrammatic flow diagram illustrating when the internal exhausted gas recirculation system of Fig. 1 is in its unlocked and locked position.

### Detailed Description

The reference will now be made in detailed to the embodiments of the disclosure, examples of which are illustrated in the accompanying drawings. Wherever possibly, the same reference numbers will be used throughout the drawings to refer to the same or like parts.

While the disclosure is susceptible to various modifications and alternative forms, a specific embodiment thereof has been shown by way of example in the drawings and will herein be described in detail. It should be understood, however, that there is no intent to limit the disclosure to the particular form disclosed, but on the contrary, the intention is to cover all modifications, equivalents, and alternatives falling within the spirit and scope of the disclosure as defined by the appended claims.

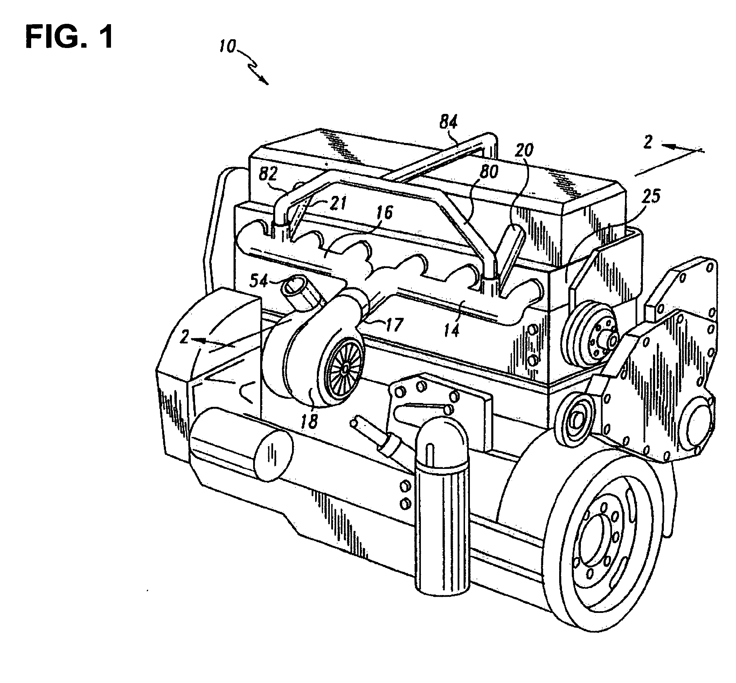

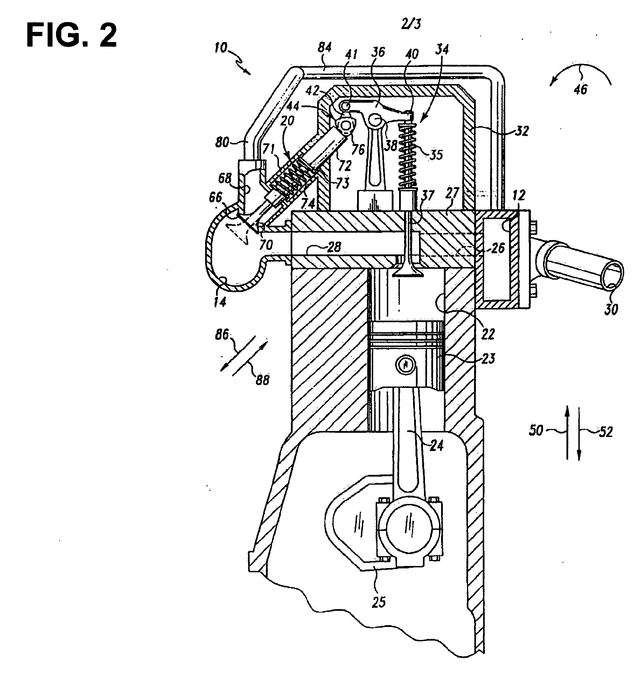

Referring now to Figs. 1 and 2, there is shown an internal combustion engine 10 which may be a sixcylinder turbocharged diesel engine. The internal combustion engine 10 includes an engine air inlet or intake manifold 12, a first engine exhaust outlet or first exhaust manifold 14, a second engine exhaust outlet or second exhaust manifold 16, a turbocharger 18, a first EGR valve assembly 20, and a second EGR valve assembly 21.

The internal combustion engine 10 may be a four stroke engine. The first stroke is an intake stroke wherein air is advanced from the intake manifold 12 to one of the cylinders 22 of the six cylinder internal combustion engine 10. The internal combustion engine then advances to a compression stroke, where the air is compressed in the cylinder.

Near the end of the compression stroke, a fuel injector (not shown) injects a fuel, such as diesel fuel, into the cylinder 22 thereby creating a fuel and air mixture in the cylinder 22. Near the top of the compression stroke, the fuel and air mixture is ignited in the cylinder 22 by the heat generated as a result of the compression stroke. Ignition of the fuel and air mixture advances the internal combustion engine 10 to a power stroke in which the fuel and air mixture is combusted and exhaust gases are formed.

The combustion of the fuel and air mixture produces energy which is converted to mechanical energy in a known manner by a piston 23, a connecting rod 24, and a crankshaft 25. Note that each stroke of the internal combustion engine 10 moves the piston alternately upward or downward causing the crankshaft 25 to rotate one half of a revolution during each stroke. Thus, the completion of the four stroke cycle requires two revolutions of the crankshaft 25.

Thereafter, the internal combustion engine 10 is advanced to an exhaust stroke wherein exhaust gases are advanced from the cylinder 22 to either the first exhaust manifold 14 or the second exhaust manifold 16. It should be appreciated that the front three cylinders 22 of the internal combustion engine 10 are in fluid communication with the first exhaust manifold 14, whereas the rear three cylinders 22 are in fluid communication with the second exhaust manifold 16.

The internal combustion engine 10 further may include an engine head 27 with a number of air inlet ports 26 and exhaust outlet ports 28 defined therein. Each of the cylinders 22 has one air inlet port 26 and one exhaust outlet 28 as shown in FIG. 2. The intake manifold 12 places the air inlet ports 26 in fluid communication with air inlet 30 associated with the internal combustion engine 10. The first exhaust manifold 14 and the second exhaust manifold 16 place the exhaust outlet ports 28 in fluid communication with an inlet 17 of the turbocharger 18. It should be appreciated that the first exhaust manifold 14 is in fluid communication with the exhaust ports 28 of each of the front three cylinders of the internal combustion engine 10, whereas the second exhaust manifold 16 is in fluid communication with the exhaust ports 28 of the rear three cylinders of the internal combustion engine 10.

An upper portion of the internal combustion engine may include a valve cover 32 which is sealably secured to the engine head 27. The valve cover 32 covers an exhaust valve assembly 34. It should be appreciated that the valve cover 32 is sealably secured to the engine head 27 such that an engine lubricant, such as oil, is contained therein so as to lubricate a number of components associated with the internal combustion engine 10.

When the exhaust valve assembly 34 is placed in a closed position, the cylinder 22 is isolated from the exhaust outlet ports 28 and hence the first and second exhaust manifolds 14, 16. During the exhaust stroke, the exhaust valve assembly 34 is placed in an open position, as shown in FIG. 2, which places the cylinder 22 in fluid communication with the first and second exhaust manifolds 14, 16 through the exhaust outlet ports 28.

The exhaust valve assembly 34 may include an exhaust valve member 37 and an exhaust spring 35 concentrically mounted about the exhaust valve member 37. The exhaust spring 35 applies a force or bias in the general direction of arrow 50 to the exhaust valve member 37 that biases the exhaust valve assembly 34 into the closed position. Hence, the exhaust valve assembly 34 is held in the closed position until urged by the exhaust rocker arm 36 into the open position during the exhaust stroke.

The exhaust rocker arm 36 is movably secured to the engine head 27. In particular, the exhaust rocker arm 36 is free to pivot about a rocker shaft 38 which is non-movably secured to the engine head 27. A first end 40 of the exhaust rocker arm 36 is operatively coupled to the exhaust valve member 37, whereas a second end 41 of the exhaust rocker arm 36 is operatively coupled to an exhaust cam lobe 42 of the camshaft 44.

As the camshaft 44 is rotated in the general direction of arrow 46, the exhaust cam lobe 42 is moved into and out of contact with the second end 41 of the exhaust rocker arm 36 during rotation of the camshaft 44.

When the exhaust cam lobe 42 is rotated into contact with the second end 41 of the exhaust rocker arm 36, the second end 41 is urged in the general direction of arrow 50. As the second end 41 of the exhaust rocker arm 36 is urged in the general direction of arrow 50, the exhaust rocker arm 36 pivots about the rocker shaft 38 thereby causing the first end 40 of the exhaust rocker arm 36 to be urged in the general direction of arrow 52 thereby likewise urging the exhaust valve member 37 in the general direction of arrow 52. When the force exerted on the exhaust valve member 37 by the first end 40 of the exhaust rocker arm 36 is greater in magnitude than the spring bias generated by the exhaust spring 35, the exhaust valve member 37 is moved in the general direction of arrow 52 thereby positioning the exhaust valve assembly 34 in the open position. When the camshaft 44 is rotated beyond the maximum height of the exhaust cam lobe 42, the spring bias of the exhaust spring 35 urges the exhaust valve member 37 in the general direction of arrow 50 thereby returning the exhaust valve assembly 34 to the closed position. It should be appreciated that as the exhaust valve member 37 is urged in the general direction of arrow 50 by the exhaust spring 35, the first end 40 of the exhaust rocker arm 36 is likewise urged in the general direction of arrow 50 which causes the exhaust rocker arm 36 to pivot about the rocker shaft 38 thereby causing the second end 41 of the exhaust rocker arm 36 to be urged in the general direction of arrow 52.

It should therefore be appreciated that as the exhaust valve assembly 34 is placed in the open position, exhaust gases within the cylinder 22 are allowed to advance from the cylinder 22, through the exhaust outlet ports 28, and into the first and second exhaust manifolds 14, 16. It should further be appreciated that as the exhaust valve assembly 34 is placed in the closed position, the cylinder 22 is isolated from the first and second exhaust manifolds 14, 16 thereby inhibiting advancement of the exhaust gases out of the cylinder 22.

During an exhaust stroke, the pressure generated by the exhaust gases in the cylinder 22 is greater than the pressure in the first and second exhaust manifolds 14, 16 and the exhaust gases advance from the cylinder 22, through the exhaust outlet ports 28, and into the first and second exhaust manifolds 14, 16 so as to create a pressure pulse in the first and second exhaust manifolds 14, 16.

In one embodiment, the first exhaust manifold 14 and the second exhaust manifold 16 each have small volumes in order to preserve the pressure of each pulse of exhaust gases that is created when an exhaust valve assembly 34 is opened. The pulses of exhaust gases are directed to the inlet 17 of the turbocharger 18 so as to accelerate a turbine disk (not shown) at a higher rate than is possible when using a large volume exhaust manifold. The turbine disk drives a shaft which accelerates the turbocharger's compressor (not shown) at the same rate as the turbine disk. The higher compressor acceleration rate enables the turbocharger 18 to compress and advance a greater amount of intake air to the compressor outlet 54 of the turbocharger 18. The compressed air from the compressor outlet 54 of the turbocharger 18 is then routed to the engine air inlet 30. It should be appreciated that the compressed air from the turbocharger is commonly routed through a cooler (not shown) prior to reaching the engine air inlet 30 in order to increase the thermal efficiency of the internal combustion engine 10.

As turbocharger efficiencies improve, the average pressure of the air in the intake manifold 12 can become greater than the average pressure of exhaust gases in the first and second exhaust manifold 14, 16 thereby preventing the use of conventional EGR valve assemblies. However, the instantaneous pressure of each pulse of exhaust gases in the first and second exhaust manifolds 14, 16 can be greater than the instantaneous pressure of the compressed air in the intake manifold 12.

During certain operating conditions of the internal combustion engine 10, it may be desirable to inhibit the formation of NOx by introducing chemically inert exhaust gases into the cylinder 22 during the intake stroke. Hence, the EGR valve assemblies 20, 21 routes exhaust gases from the first and second exhaust manifolds 14, 16 to the intake manifold 12. In particular, the first EGR valve assembly 20 places the first exhaust manifold 14 in fluid communication with the intake manifold 12 whereas the second EGR valve assembly 21 places the second exhaust manifold 16 in fluid communication with the intake manifold 12. It should be noted that the mechanical configuration of the first EGR valve assembly 20 is substantially identical to the mechanical configuration of the second EGR valve assembly 21. As a result, only the first EGR valve assembly 20 is described in detail.

To route exhaust gases from the first and second exhaust manifolds 14, 16 to the intake manifold 12, the internal combustion engine 10 further may include a first EGR line 80, a second EGR line 82 and a third EGR line 84. The first EGR line 80 places the first exhaust manifold 14 in fluid communications with the third EGR line 84 via the first EGR valve assembly 20. The second EGR line 82 places the second exhaust manifold 16 in fluid communications with the third EGR line 84 via the second EGR valve assembly 21. The third EGR line 84 places the intake manifold 12 in fluid communication with the first EGR line 80 and the second EGR line 82. Thus, the first exhaust manifold 14 is placed in fluid communication with the intake manifold 12 via a fluid path that includes the first EGR valve 20, the first EGR line 80, and the third EGR line 84. Similarly, the second exhaust manifold 16 is placed in fluid communication with the intake manifold 12 via a fluid path that includes the second EGR valve 21, the second EGR line 82, and the third EGR line 84.

The first EGR valve assembly 20 may include a valve member 70, a housing 71, a cam follower 72, a spring retainer 73, and an EGR spring 74. An inlet 66 of the valve housing 71 is in fluid communication with the first exhaust manifold 14 whereas an outlet 68 of the valve housing 71 is in fluid communication with the first EGR line 80. The valve member 70 is positioned in the housing 71 and is movable between a first valve position in which the valve member 70 is spaced apart from the inlet 66 (as shown in phantom in FIG. 2) and a second valve position shown in solid lines FIG. 2.

In the second valve position, the valve member 70 blocks flow between the first exhaust manifold 14 and the first EGR line 80 so as to isolate the first exhaust manifold 14 from the intake manifold 12. In the first valve position, the valve member 70 enables fluid flow between the first exhaust manifold 14 and the first EGR line 80 so as to place the first exhaust manifold 14 in fluid communication with the intake manifold 12.

The spring retainer 73 is secured to one end of the valve member 70. The EGR spring 74 is interposed between the spring retainer 73 and the housing 71 thereby urging the valve member 70 in the general direction of arrow 88 so as to bias the valve member 70 toward the second valve position. One end of the cam follower 72 is operatively coupled to the end of the valve member 70 which is attached to the spring retainer 73 whereas the other end of the cam follower 72 is operatively positioned in contact with for example a three lobed cam member 76. The cam follower 72 is moveable in the general direction of arrows 86 and 88.

The speed of the internal combustion engine 10 is defined by the rotational speed of the crankshaft 25 in the general direction of arrow 46. The exhaust valve assembly 37 may be positioned in the open position during the exhaust stroke, and positioned in the closed position during the other three strokes.

Since each stroke of the four stroke cycle requires one half of a revolution of the crankshaft 25 to complete, the exhaust cam lobe 42 must urge exhaust valve assembly 37 into the open position once during the two rotations of the crankshaft 25 required to complete the four stroke cycle. Therefore, the camshaft 44 must rotate at one half of the crankshaft speed, so as to urge the exhaust valve assembly 34 into the open position with the exhaust cam lobe 42 during the exhaust stroke.

As the camshaft 44 is rotated one half the engine speed in the general direction of arrow 46, the three lobed cam member 76 of the camshaft 44 is moved between a first cam member position to a second cam member position. In the first cam member position, a lobe of the cam member 76 is urged against the cam follower 72 in the general direction of arrow 86 of FIG. 2 so that the valve member 70 is positioned in the first valve position. It should be appreciated that when the valve member 70 is in the first valve position, exhaust gases are enabled to flow from the first exhaust manifold 14 to the intake manifold 12.

As the camshaft 44 rotates, the three lobed cam member 76 is moved into a second cam member position. In the second cam member position, the spring bias of the EGR spring 74 urges the valve member 70 in the general direction of arrow 88 thereby positioning the valve member 70 in the second valve position as shown in Fig. 2. It should be appreciated that when the valve member 70 is in the second valve position, the valve member 70 blocks the flow of exhaust gases between the first exhaust manifold 14 and the intake manifold 12.

Note that the four stroke cycle described above is completed once every two revolutions of the crankshaft 25, i.e. each of the four strokes corresponds to either a downward motion of piston 23 in the general direction of arrow 52 or an upward motion of the piston 23 in the general direction of arrow 50. The intake and power strokes are performed on the downward motion of the piston 23 whereas the compression and exhaust strokes are performed on an upward motion. Thus, to complete all four strokes, the crankshaft 25 must rotate through the two revolutions or the 720 degrees.

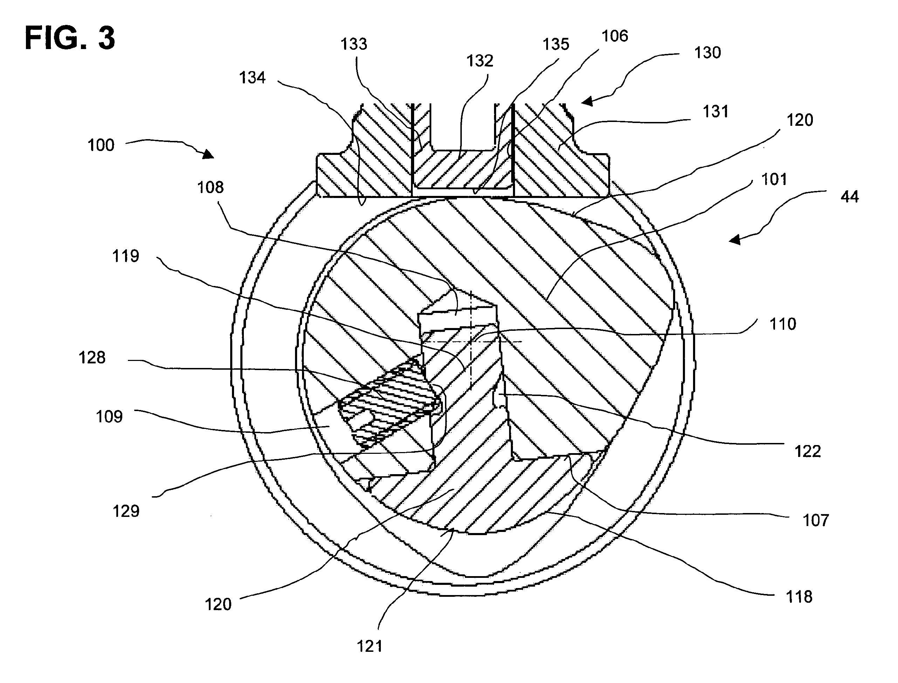

It should be appreciated that during each exhaust stroke, the exhaust valve assembly 34 is opened to advance exhaust gases from the cylinder 22 through the exhaust port 28 and to the first exhaust manifold 14 whereby each cylinder 22 which is in fluid communication with the first exhaust manifold 14 creates a pulse of exhaust gases in the first exhaust manifold 14. It should further be appreciated that the first exhaust manifold 14 is in fluid communication with the exhaust ports 28 of the three front cylinders of the internal combustion engine 10 so as to produce a total of three exhaust pulses during each period defined by two revolutions of the crankshaft 25 shown in Fig. 3. The frequency that each of the pulses recur is once per every two revolutions of the crankshaft 25 thereby resulting in a total of three pulses every two revolutions of the crankshaft 25.

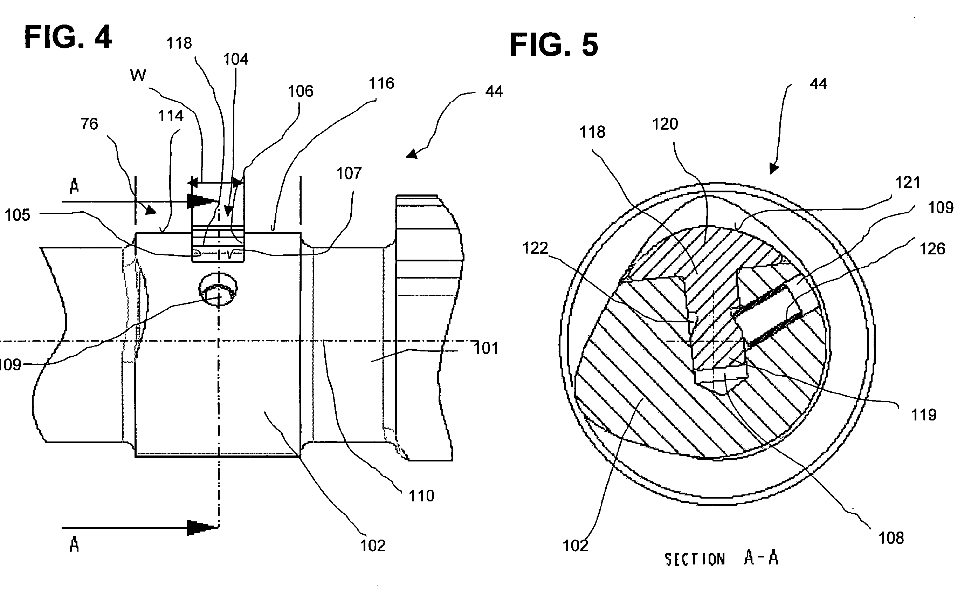

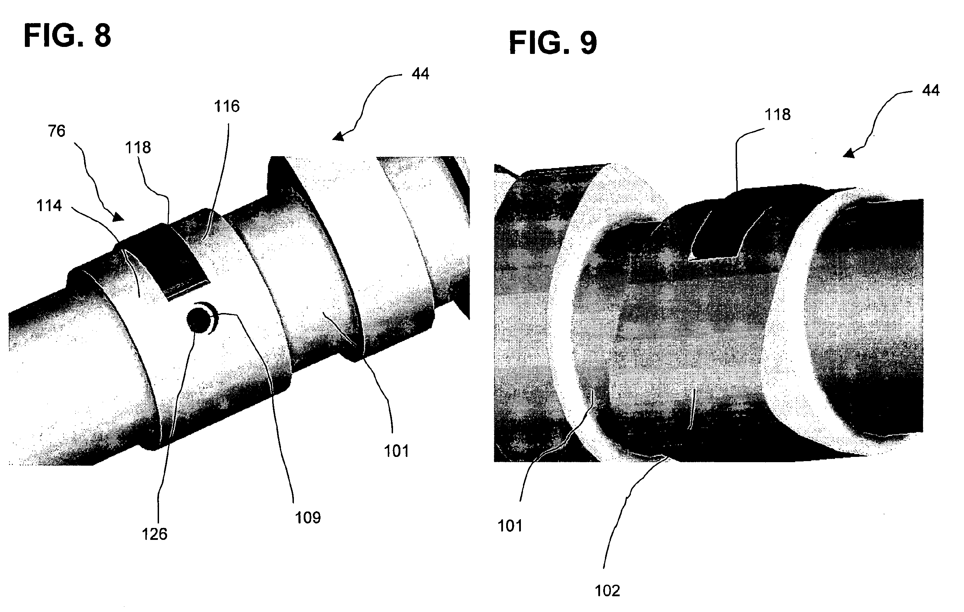

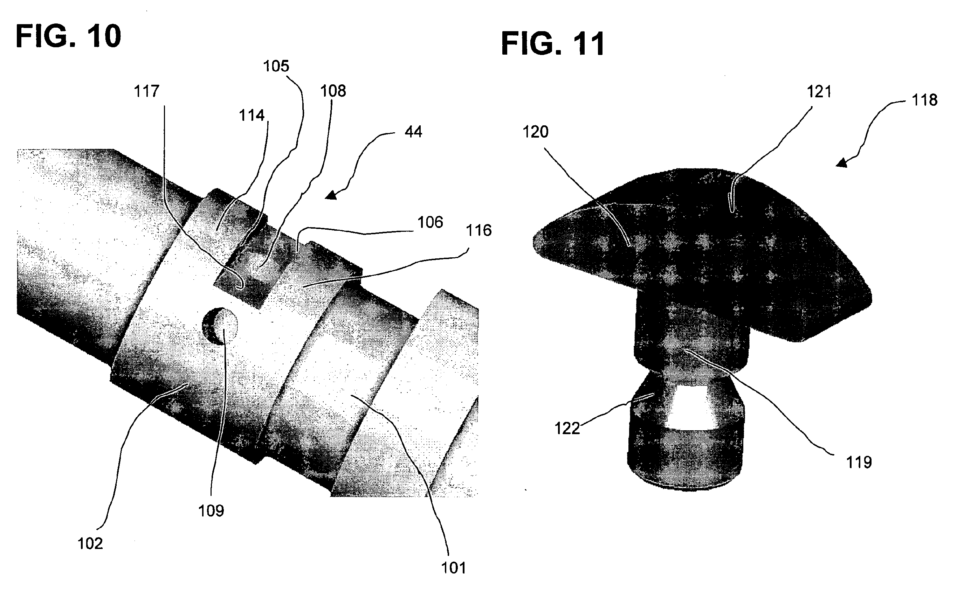

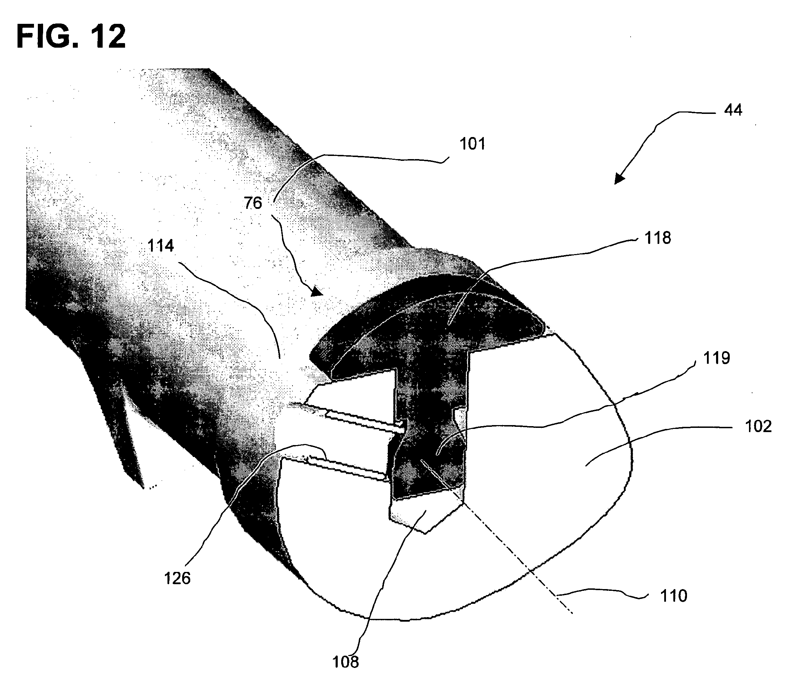

Referring to Fig. 3, an exemplary cam-driven internal exhaust gas recirculation system assembly 100 for an internal combustion engine 10 as described above, or for any other engine may comprise a camshaft 44 and a cam follower 130 for activating or deactivating the internal exhaust gas recirculation system. The camshaft 44 shown in Fig. 3 and the camshafts shown in the further Figs. 4-19 may be used in an internal combustion engine described above with reference to Figs. 1 and 2. Therefore, the three lobed cam member 76 as mentioned above may be replaced by a "tri-lobe" camshaft 44 having a mechanically affixed separate cam lobe 118 shown in Figs. 3-18.

It should be appreciated that the camshafts disclosed in this description and for example shown in Figs. 3-18 can be used not only in combination with an internal exhaust gas recirculation system, but also for driving rocker arms that actuate valves and injectors associated with a plurality of combustion cylinders. A combination of a camshaft and a separate cam lobe arranged in an aperture of the camshaft wherein a mounting projection of the cam lobe inserted in a mounting hole of the camshaft and secured therein by a mechanical lock can be used in various technical arrangements in which a cam lobe drives a switch or a lever while the camshaft rotates around its longitudinal axis.

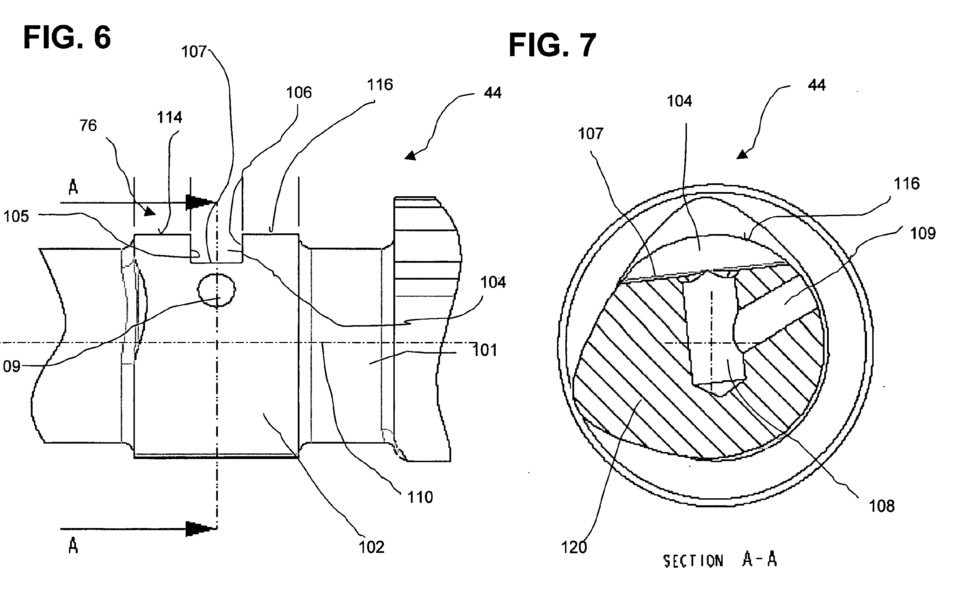

The camshaft 44 and the associated cam follower 130 will now be described in more detail with reference to Figs. 3 - 12. As shown in Fig. 3 and 4, the camshaft 44 has a shaft body 101 and a first cam lobe 102 integrally formed thereon (see e.g. Figs. 4, 6, 8 and 9). An aperture or slot 104 is provided on one side of the outer circumference of the first cam lobe 102 (see e.g. Figs. 6 and 7). The slot 104 has a predetermined width W and extends for example at right angles to a longitudinal axis 110 of the camshaft 44. A blind hole 108 is provided in a bottom wall 107 between lateral walls 105 and 106 of the slot 104. The blind hole 108 extends in a radial direction of the shaft body 101.

In this exemplary embodiment of the disclosure, the blind hole 108 extends beyond the longitudinal axis 110 of the shaft body 101 (here, the longitudinal axis 110 coincides with the rotational axis of the camshaft 44) and, hence, the blind hole 108 has a length which is greater than the radius of the shaft body 101. However, in another exemplary embodiment of the disclosure, the blind hole 108 may not extend up to the longitudinal axis 110 of the shaft body 101 and, therefore, the blind hole 108 has a length which is shorter than the radius of the shaft body 101.

Another hole 109 extends from the outer circumference of the shaft body 101 to the blind hole 108. As shown in Fig. 4, the first cam lobe 102 is divided by the slot 104 into two cam lobes 114 and 116. A separate third cam lobe 118 is arranged between these two cam lobes 114, 116. The separate cam lobe 118 may include a cam body 120 and a stem 119 formed integrally thereon. The cam body 120 has an outer surface 121 or "cam surface" which the cam follower 130 may contact. The outer surface 121 of the separate cam lobe 118 may be positioned above outer surfaces of the cam lobes 114, 116. Other designs of the outer surface 121 in relation to the outer surfaces of the cam lobes 114, 116 may be applicable.

The stem 119 of the separate cam lobe 118 is fitted in the blind hole 108. The kind of fit between the stem 119 and the blind hole 109 can be for example a light press fit or a transition fit. If the stem 119 is fitted within the blind hole 108, the cam body 120 bears on the bottom wall 107 of the slot 104. Due to the correct and/or precise alignment of the blind hole 108 in relation to the shaft body 101 and the aligning of the slot 104 as well as due to the correct and/or precise manufacturing of the stem 119 and the bearing surfaces of the cam body 120, the entire separate cam lobe 118, more particularly the outer surface 121 of the cam body 120, is disposed on the shaft body 101 in a manner for a correct operation of the associated cam follower 130. In another embodiment, the the cam body may have a keyed groove

As for example shown in Fig. 5, the stem 119 of the separate cam lobe 118 may have a groove 122. In the exemplary embodiment shown in Fig. 5, the groove 122 extends around the entire circumference of the stem 119. However, a groove extending only on a partial circumference of the stem 119 might be appropriate as well. The groove 122 functions in combination with a mechanical lock 128, e.g. a grub screw, for fixing the separate cam lobe 118 in a radial direction within the blind hole 108. The inner end face 127 of the mechanical lock 128 bears on a wall of the groove 122 so that a movement of the stem 119 in the radial direction within the blind hole 108 is prevented.

The lateral walls 106 of the slot 104 prevent a rotational movement of the cam lobe 118. Together with the mechanical lock 128, the separate cam lobe 118 is positioned so that a correct operation of the associated cam follower 130 is secured. In this exemplary embodiment of the disclosure, the hole 109 has an inner thread 111 in which an outer thread of the grub screw 128 is screwed in.

In the exemplary embodiment of the present disclosure shown in Fig. 3, the mechanical lock is a grub screw 128. Alternatively, the mechanical lock may be spring dowel 126, as shown in Fig. 5, or any other means which allows to prevent a movement of the stem 119 in the radial direction within the hole 108 by a positive locking. Like the inner end face 129 of the grub screw 128, the inner end surface 127 of the spring dowel 126 bears on a wall of the groove 122 so that a radial movement of the stem 119 is prevented.

In the following, the cam follower 130 and its construction will be described in more details, referring to Fig. 3. The cam follower 130 may include a first cam follower part 131 and a second cam follower part 132 arranged in the center of the first cam follower part 131. The second cam follower part 132 may be movable in a hole 133 of the first cam follower part 131. The cam follower part 132 may be fitted in the hole 133 with a medium fit or transition fit or a play fit.

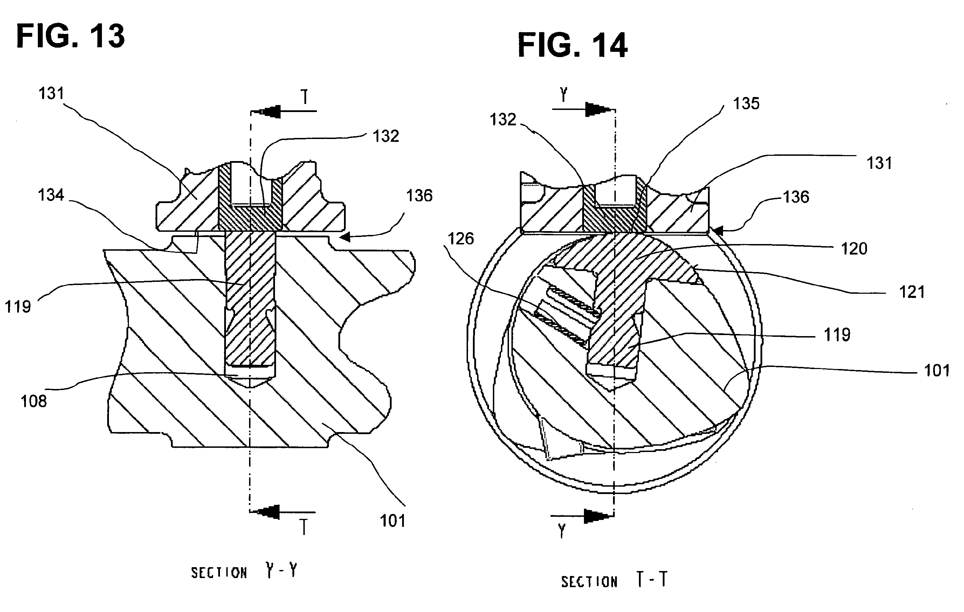

The first cam follower part 131 has a cam contacting surface 134 which may contact the two cam lobes 114, 116 of the camshaft 44. The cam follower part 132 has a cam contacting surface 135 which may contact the cam lobe surface 121 of the separate cam lobe 118. The cam follower part 132 may be positioned in a first position and a second position as mentioned above with respect to Fig. 1 and 2. In the first position shown in Fig. 3, the cam follower part 132 is moved backwards and, hence, the cam contacting surface 135 is retracted compared to the cam contacting surface 134 of the first cam follower part 131. In the second position, the second cam follower part 132 is positioned such that the cam contacting surface 135 is aligned with the cam contacting surfaces 134 of the first cam follower part 131 (see for example Figs. 13 and 14).

### Industrial Applicability

The operation of the cam-driven internal exhaust gas recirculation system assembly 100 shown in Fig. 3 will now be described with reference to Figs. 13 to 19.

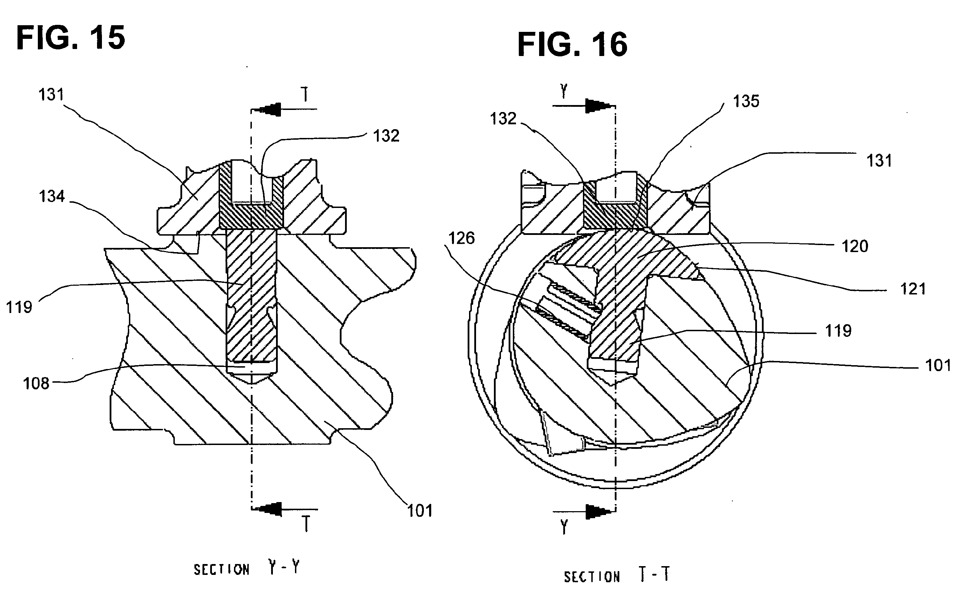

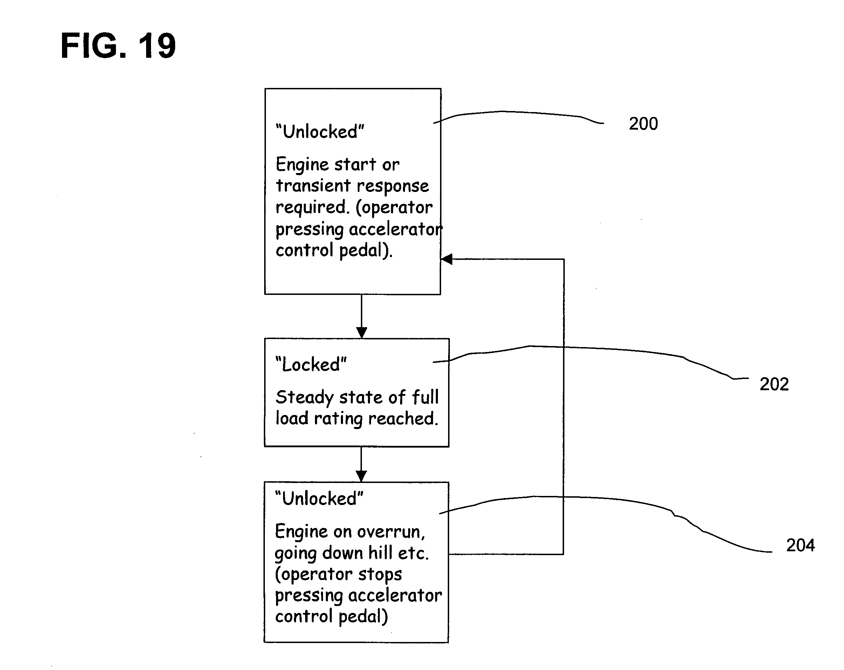

As already mentioned above, the second cam follower part 132 may take two different positions. The first position is shown in Figs. 14 and 15. In this position, the second cam follower part 132 is in its forward position in which the cam contacting surface 135 of the cam follower part 132 aligns with the cam follower surface 134 of the first cam follower part 131. In this forward position of the cam follower part 132, the cam follower part 132 is active and, consequently, the EGR system is also active. That means, that exhaust gases within the cylinder 22 are allowed to advance from the cylinder 22, through the exhaust outlet ports 28, and into the first and second exhaust manifolds 14, 16. For further details, we refer to the above description of the functioning of the exhausted valve assembly 34 in connection with Figs. 1 and 2. The position shown in Figs. 13 and 14 corresponds with block 200 of Fig. 19. With other words: the "unlocked" position corresponds to the position shown in Figs. 13 and 14.

If an internal combustion engine is being started or a transient response is required, i.e. an operator presses the accelerator control paddle, the EGR system is active and exhaust gas is recirculated. In the position shown in Figs. 13 and 14, only the cam contacting surface 135 of the second cam follower part 132 is in contact with the cam outer surface of the separate cam lobe 118. Between the two surfaces 134 of the fist cam follower part 131 and the cam lobes 114, 116 a gap 137 is existing.

Referring to Figs. 15 and 16, the second position, i.e. the backward position, of the cam follower part 132 is shown. This position may also called "inactive internal EGR system position". Here, the cam contacting surface 134 of the first cam follower part 131 contacts the two cam lobes 114, 116. In this position, the internal EGR system is inactive and no internal exhaust gas recirculation is running. This position corresponds to a "locked" position as mentioned in block 202 of Fig. 19. This position is assumed when a steady state of full load rating is reached.

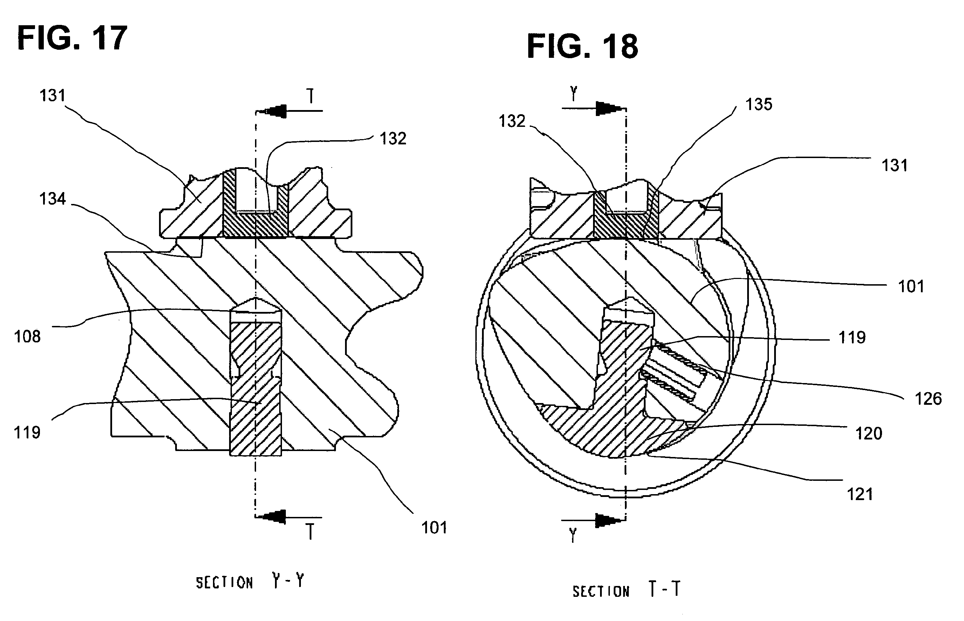

In Figs. 17 and 18, a position of the cam shaft 44 is shown in which the separate cam lobe 118 is away from the cam follower 130. Here, the EGR system can be active or inactive.

If, as shown in Fig. 18, the engine is on overrun, going down a hill etc., or the operator stops to press the accelerator control paddle, as mentioned in block 203 of Fig. 19, the "unlocked" position is resumed.

In one or more of the above-identified embodiments, one advantage of the present disclosure may be that it is now possible to grind a cam lobe onto a normal cam lobe in a small space. Usually, a minimum gap of about 3.5 mm between cam lobes arranged side by side is required. Now, according to the disclosure, such a gap may be not required anymore.

In addition, in one or more of the above-identified embodiments, the cam lobe which is replaceable while still being correctly positioned in its operating position according to the above disclosure may be used as an "EGR lobe" or as an cam lobe for activating or deactivating an "EGR switch button".

Furthermore, in one or more of the above-identified embodiments, the cam lobe which is replaceable while still being correctly positioned in its operating position, may have the advantage that one single follower having an "EGR switch button" can be used to turn an internal EGR system on and off.

Finally, it should be noted that the term "EGR" may include an "ICCD" system (In-Cylinder Charge Dilution System).

Although the preferred embodiments of this disclosure have been described herein, improvements and modifications may be incorporated without departing from the scope of the following claims.

## Claims

1. An assembled camshaft (44) comprising:
- a shaft body (101) having a rotational axis (110) and an outer circumference;
- a first cam lobe (102) having an outer circumference configured to be contacted by a first cam follower (131) in an operating position, said first cam lobe (102) being formed integrally on the outer circumference of said shaft body (101);
- an aperture (104) provided in the outer circumference on the first cam lobe (102) and extending transversely to the rotational axis (110) of said shaft body (101), said aperture (104) having a predetermined width;
- a second cam lobe (118) having an outer circumference configured to be contacted by a second cam follower (132), said second cam lobe (118) further having a cam lobe mounting projection (119); said second cam lobe (118) being arranged in said aperture (104) and said mounting projection (119) being arranged in said mounting hole (108);
**characterized in that**
- said aperture (104) has a flat bottom wall (107);
- a mounting hole (108) extends from said flat bottom wall (107) radially;
- a hole (109) extends from the outer circumference of said shaft body (101) to said mounting hole (108); and
- a mechanical lock (126; 128) is configured to be arranged in said hole (109) while urging against said mounting projection (119) to releasably fix said mounting projection (119) in said mounting hole (108) such that said second cam lobe (118) is replaceable while still being correctly positioned in its fixed operating position, said mechanical lock (126; 128) being one of the group consisting of a spring dowel (126), grub screw (128), and a cap head screw.

2. The assembled camshaft (44) of claim 1, wherein said aperture is formed like a longitudinal key way or slot (104).

3. The assembled camshaft (44) of claim 2, wherein said mounting hole (108) is arranged within 0,3-0,7 degrees, in particular 0,5 degrees indexed from the keyway or slot (104).

4. The assembled camshaft (44) of claim 2 or 3, wherein said key way or slot (104) has a longitudinal axis extending within a tolerance range of 0,3-0,7 degrees, in particular 0,5 degrees at right angles to the longitudinal axis (110) of the shaft body (101).

5. The assembled camshaft (44) of claim 1, wherein said mounting projection has an outer circumference in form of a circular cylindrical stem (119), at least one groove (122) being formed in said outer circumference.

6. The assembled camshaft (44) of claim 5, wherein said groove (122) extends around the whole outer circumference of said stem (119).

7. The assembled camshaft (44) of claim 1, wherein a threaded hole (109) extends from the outer circumference of said shaft body (101) to said mounting hole (108) and said mechanical lock (128) is screwed in said threaded hole (109) while urging against said mounting projection (119).

8. An internal combustion engine (10) comprising:
- an engine air inlet (12);
- an engine exhaust outlet (14);
- a valve assembly (20; 21) which is positionable between a first valve position and a second valve position;
- an assembled camshaft (44) of one of the preceding claims driving a cam-driven assembly; and
- a switch assembly (130) which includes a first cam follower (131) and a second cam follower (132), wherein said second cam follower (132) is movable relative to said first cam follower (131) and lockable in an inactive position;
wherein said second cam lobe (118) of said assembled camshaft (44) causes said valve assembly (20, 21) to be positioned at said first valve position when said second cam follower (132) is unlocked, and said second cam lobe (118) of said assembled camshaft (44) causes said valve assembly (20, 21) to be positioned at said second valve position when said second cam lobe (118) is locked at said inactive position.

9. The internal combustion engine (10) of claim 8, wherein the cam-driven assembly is adapted to be an internal exhaust gas recirculation system assembly (100).

10. The internal combustion engine (10) of claim 9, wherein the internal exhaust gas recirculation system assembly (100) comprises the valve assembly (20; 21), the valve assembly including a valve housing (71) having a housing inlet (66) and a housing outlet (68); and
- the internal combustion engine (10) further comprises:
a first conduit (80) which connects said engine exhaust outlet (14) in fluid communication with said housing inlet (66); and
a second conduit (82) which connects said engine air inlet (12) in fluid communication with said housing outlet (68);
wherein the switch assembly is adapted to be an internal exhaust gas recirculation switch; and
wherein engine exhaust gases are allowed to advance from said engine exhaust outlet (14) to said engine air inlet (12) when said valve assembly (20, 21) is positioned in said first valve position, and air is prevented from advancing from said engine air inlet (12) to said engine exhaust outlet (14) when said valve assembly (20, 21) is positioned in said second valve position.

11. A method for manufacturing a camshaft (44) constructed to be used in combination with a cam-driven internal exhaust gas circulation system assembly (100), comprising:
- manufacturing a camshaft (44) having a first cam member (102, 114, 116) formed integrally on said camshaft (44) and configured to be contacted by a first cam follower (131);
- making a slot (104) in an outer surface of said cam member (102, 114, 116) such that the slot (104) extends transversely to a rotational axis (110) of said camshaft (44), said slot (104) having a predetermined width and a flat bottom wall (107);
- making a mounting hole (108) within said slot (104) such that said mounting hole (108) extends from said flat bottom wall (107) radially;
- making a second hole (109) extending from an outer circumference of said camshaft (44) to said mounting hole (108);
- grinding said first cam member (102, 114, 116) such that its cam lobe surface achieves the desired shape;
- manufacturing a second separate cam member (118) having a mounting projection (119), wherein said second cam member (118) has a width corresponding to the width of said slot (104) and said mounting projection (119) fits into said mounting hole (108);
- grinding said separate cam member (118) such that its cam lobe surface achieves the desired shape;
- inserting said second cam member (118) into said slot (104) such that the mounting projection (119) is located in said mounting hole (108); and
- inserting a mechanical lock (126; 128) in said second hole (109) such that it fixes said mounting projection (119) within said mounting hole (108) such that said second cam member (118) is replaceable while still being correctly positioned in its fixed operating position, said mechanical lock (126; 128) being one of the group consisting of a spring dowel (126), grub screw (128), and a cap head screw.

## Patentansprüche

1. Zusammengesetzte Nockenwelle (44) mit:
- einem Wellenkörper (101) mit einer Drehachse (110) und einem Außenumfang;
- einem ersten Nockenvorsprung (102) mit einem Außenumfang, der dazu ausgebildet ist, von einem ersten Nockenfolger (131) in einer Betriebsstellung kontaktiert zu werden, wobei der erste Nockenvorsprung (102) integral am Außenumfang des Wellenkörpers (101) ausgebildet ist;
- einer Öffnung (104), die im Außenumfang des ersten Nockenvorsprungs (102) vorhanden ist und sich quer zur Drehachse (110) des Wellenkörpers (101) erstreckt, wobei die Öffnung (104) eine vorbestimmte Breite aufweist;
- einem zweiten Nockenvorsprung (118) mit einem Außenumfang, der dazu ausgebildet ist, von einem zweiten Nockenfolger (132) kontaktiert zu werden, und ferner einen Befestigungsvorsprung (119) aufweist, wobei der zweite Nockenvorsprung (118) in der Öffnung (104) angeordnet ist und der Befestigungsvorsprung in dem Befestigungsloch (108) angeordnet ist;
**dadurch gekennzeichnet, dass**
- die Öffnung (104) eine ebene Bodenwand (107) aufweist;
- ein Befestigungsloch (108) sich radial von der ebenen Bodenwand (107) erstreckt;
- ein Loch (109) sich von dem Außenumfang des Wellenkörpers (101) zum Befestigungsloch (108) erstreckt; und
- eine mechanische Verriegelung (126; 128) zum Anordnen in dem Loch (109) ausgebildet ist und gegen den Befestigungsvorsprung (119) drückt, um den Befestigungsvorsprung (119) in dem Befestigungsloch (108) lösbar zu fixieren, so dass der zweite Nockenvorsprung (118) austauschbar ist und weiterhin in seiner fixierten Betriebsstellung korrekt positioniert ist, wobei die mechanische Verriegelung (126; 128) aus der einen Spannstift (126), eine Madenschraube (128) und eine Inbusschraube aufweisenden Gruppe ausgewählt ist.

2. Zusammengesetzte Nockenwelle (44) nach Anspruch 1, wobei die Öffnung wie eine längsverlaufende Keilnut oder ein Schlitz (104) ausgebildet ist.

3. Zusammengesetzte Nockenwelle (44) nach Anspruch 2, wobei das Befestigungsloch (108) von der Keilnut oder dem Schlitz (104) zwischen 0,3 - 0,7 Grad, vorzugsweise 0,5 Grad, versetzt angeordnet ist.

4. Zusammengesetzte Nockenwelle (44) nach Anspruch 2 oder 3, wobei die Keilnut oder der Schlitz (104) eine Längsachse aufweisen, die sich unter einem rechten Winkel zur Längsachse (110) des Wellenkörpers (101) in einem Toleranzbereich von 0,3 - 0,7 Grad, vorzugsweise 0,5 Grad, erstreckt.

5. Zusammengesetzte Nockenwelle (44) nach Anspruch 1, wobei der Befestigungsvorsprung einen Außenumfang in Form eines kreisförmigen zylindrischen Schaftes (119) aufweist, und mindestens eine Nut (122) in dem Außenumfang ausgebildet ist.

6. Zusammengesetzte Nockenwelle (44) nach Anspruch 5, wobei sich die Nut (122) um den gesamten Außenumfang des Schaftes (119) erstreckt.

7. Zusammengesetzte Nockenwelle (44) nach Anspruch 1, wobei sich eine Gewindebohrung (109) von dem Außenumfang des Wellenkörpers (101) zum Befestigungsloch (108) erstreckt, und die mechanische Verriegelung (128) in die Gewindebohrung (109) eingeschraubt ist und gegen den Befestigungsvorsprung (119) drückt.

8. Brennkraftmaschine (10) mit:
- einem Motorlufteinlass (12);
- einem Motorabgasauslass (14);
- einer Ventilanordnung (20; 21), die zwischen einer ersten Ventilstellung und einer zweiten Ventilstellung einstellbar ist;
- einer zusammengesetzten Nockenwelle (44) nach einem der vorangehenden Ansprüche, die eine Nockenanordnung antreibt; und
- einer Schaltanordnung (130), die einen ersten Nockenfolger (131) und einen zweiten Nockenfolger (132) aufweist, der bezüglich dem ersten Nockenfolger (131) bewegbar ist und in einer Ruhestellung verriegelbar ist,
wobei der zweite Nockenvorsprung (118) der zusammengesetzten Nockenwelle (44) bewirkt, dass die Ventilanordnung (20, 21) bei der ersten Ventilstellung positioniert ist, wenn der zweite Nockenfolger (132) entriegelt ist, und wobei der zweite Nockenvorsprung (118) der zusammengesetzten Nockenwelle (44) bewirkt, dass die Ventilanordnung (20, 21) bei der zweiten Ventilstellung positioniert ist, wenn der zweite Nockenvorsprung (118) in der Ruhestellung verriegelt ist.

9. Brennkraftmaschine (10) nach Anspruch 8, wobei die Nockenanordnung als interner Abgasrezirkulationssystemaufbau (100) angepasst ist.

10. Brennkraftmaschine (10) nach Anspruch 9, wobei der interne Abgasrezirkulationssystemaufbau (100) die Ventilanordnung (20; 21) aufweist, die ein Ventilgehäuse (71) mit einem Gehäuseeinlass (66) und einem Gehäuseauslass (68) aufweist; und
- die Brennkraftmaschine (10) ferner umfasst:
eine erste Leitung (80), die den Motorabgasauslass (14) strömungsmäßig mit dem Gehäuseeinlass (66) verbindet; und
eine zweite Leitung (82), die den Motorlufteinlass (12) strömungsmäßig mit dem Gehäuseauslass (68) verbindet;
wobei die Schaltanordnung als interner
Abgasrezirkulationsschalter ausgebildet ist; und
wobei ermöglicht wird, dass Motorabgase von dem Motorabgasauslass (14) in den Motorlufteinlass (12) eintreten, wenn die Ventilanordnung (20, 21) in der ersten Ventilstellung positioniert ist, und verhindert wird, dass Luft aus dem Motorlufteinlass (12) in den Motorabgasauslass (14) eintritt, wenn die Ventilanordnung (20, 21) in der zweiten Ventilstellung positioniert ist.

11. Verfahren zur Herstellung einer Nockenwelle (44), die dazu ausgebildet ist, in Kombination mit einem mit Nocken angetriebenen internen Abgaszirkulationssystemaufbau (100) verwendet zu werden, wobei das Verfahren aufweist:
- Herstellen einer Nockenwelle (44) mit einem ersten Nockenelement (102, 114, 116), das integral an der Nockenwelle (44) ausgebildet ist, und zum Kontaktieren durch einen ersten Nockenfolger (131) ausgebildet ist;
- Formen eines Schlitzes (104) an einer Außenfläche des Nockenelements (102, 114, 116), so dass der Schlitz (104) sich quer zu einer Drehrichtung (110) der Nockenwelle (44) erstreckt, mit einer vorbestimmten Breite und einer ebenen Bodenwand (107);
- Ausbilden eines Befestigungslochs (108) im Schlitz (104), so dass das Befestigungsloch (108) sich von der ebenen Bodenwand (107) radial erstreckt;
- Ausbilden eines zweiten Lochs (109), das sich von einem Außenumfang der Nockenwelle (44) zur Befestigungsbohrung (108) erstreckt;
- Schleifen des ersten Nockenelements (102, 114, 116), so dass dessen Nockenvorsprungsfläche die gewünschte Form aufweist;
- Herstellen eines zweiten separaten Nockenelements (118) mit einem Befestigungsvorsprung (119), wobei das zweiten Nockenelement (118) eine Breite aufweist, die der Breite des Schlitzes (104) entspricht, und wobei der Befestigungsvorsprung (119) in das Befestigungsloch (108) passt;
- Schleifen des separaten Nockenelements (118), so dass dessen Nockenvorsprungsfläche die gewünschte Form aufweist;
- Einsetzen des zweiten Nockenelements (118) in den Schlitz (104), so dass der Befestigungsvorsprung (119) in dem Befestigungsloch (108) angeordnet ist; und
- Einsetzen einer mechanischen Verriegelung (126; 128) in dem zweiten Loch (109), so dass sie den Befestigungsvorsprung (119) im Inneren des Befestigungslochs (108) fixiert, so dass das zweite Nockenelement (118) austauschbar ist und weiterhin in seiner fixierter Betriebsstellung korrekt positioniert ist, wobei die mechanische Verriegelung (126; 128) aus der einen Spannstift (126), eine Madenschraube (128) und eine Inbusschraube aufweisenden Gruppe ausgewählt ist.

## Revendications

1. Arbre à cames assemblé (44) comprenant:
un corps d'arbre (101) présentant un axe de rotation (110) et une circonférence extérieure;
un premier lobe de came (102) présentant une circonférence extérieure configurée de manière à être mise en contact avec un premier poussoir de came (131) dans une position de fonctionnement, ledit premier lobe de came (102) étant formé intégralement sur la circonférence extérieure dudit corps d'arbre (101);
une ouverture (104) prévue dans la circonférence extérieure sur le premier lobe de came (102) et s'étendant transversalement l'axe de rotation (110) dudit corps d'arbre (101), ladite ouverture (104) présentant une largeur prédéterminée;
un deuxième lobe de came (118) présentant une circonférence extérieure configurée de manière à être mise en contact avec un deuxième poussoir de came (132), ledit deuxième lobe de came (118) comportant en outre une saillie de montage de lobe de came (119); ledit deuxième lobe de came (118) étant agencé dans ladite ouverture (104), et ladite saillie de montage (119) étant agencée dans ledit trou de montage (108);
**caractérisé en ce que**:
ladite ouverture (104) présente une paroi de fond plate (107);
un trou de montage (108) s'étend radialement à partir de ladite paroi de fond plate (107);
un trou (109) s'étend à partir de la circonférence extérieure dudit corps d'arbre (101) jusqu'audit trou de montage (108); et
un verrou mécanique (126; 128) est configuré de manière à être agencé dans ledit trou (109) tout en poussant contre ladite saillie de montage (119) afin de fixer de façon détachable ladite saillie de montage (119) dans ledit trou de montage (108) de telle sorte que ledit deuxième lobe de came (118) puisse être remplacé tout en étant encore positionné correctement dans sa position de fonctionnement fixe, ledit verrou mécanique (126; 128) appartenant au groupe comprenant un goujon à ressort (126), une vis sans tête (128) et une vis à tête.

2. Arbre à cames assemblé (44) selon la revendication 1, dans lequel ladite ouverture est formée comme un chemin de clavette ou une fente longitudinal(e) (104).

3. Arbre à cames assemblé (44) selon la revendication 2, dans lequel ledit trou de montage (108) est agencé à l'intérieur d'une indexation de 0,3 degré à 0,7 degré, en particulier 0,5 degré, par rapport au chemin de clavette ou à la fente (104).

4. Arbre à cames assemblé (44) selon la revendication 2 ou 3, dans lequel ledit chemin de clavette ou ladite fente (104) présente un axe longitudinal qui s'étend à l'intérieur d'une plage de tolérance de 0,3 degré à 0,7 degré, en particulier 0,5 degré à angles droits par rapport à l'axe longitudinal (110) du corps d'arbre (101).

5. Arbre à cames assemblé (44) selon la revendication 1, dans lequel ladite saillie de montage présente une circonférence extérieure sous la forme d'une tige cylindrique circulaire (119), au moins une rainure (122) étant formée dans ladite circonférence extérieure.

6. Arbre à cames assemblé (44) selon la revendication 5, dans lequel ladite rainure (122) s'étend autour de la totalité de la circonférence extérieure de ladite tige (119).

7. Arbre à cames assemblé (44) selon la revendication 1, dans lequel un trou fileté (109) s'étend à partir de la circonférence extérieure dudit corps d'arbre (101) jusqu'audit trou de montage (108), et ledit verrou mécanique (128) est vissé dans ledit trou fileté (109) tout en poussant contre ladite saillie de montage (119).

8. Moteur à combustion interne (10), comprenant:
une entrée d'air de moteur (12);
une sortie d'échappement de moteur (14);
un ensemble de soupape (20; 21) qui peut être positionné entre une première position de soupape et une deuxième position de soupape;
un arbre à cames assemblé (44) selon l'une quelconque des revendications précédentes qui entraîne un ensemble entraîné par des cames; et
un ensemble d'interrupteur (130) comprenant un premier poussoir de came (131) et un deuxième poussoir de came (132), dans lequel ledit deuxième poussoir de came (132) est mobile par rapport audit premier poussoir de came (131) et peut être verrouillé dans une position inactive,
dans lequel ledit deuxième lobe de came (118) dudit arbre à cames assemblé (44) amène ledit ensemble de soupape (20, 21) à être positionné dans ladite première position de soupape lorsque ledit deuxième poussoir de came (132) est déverrouillé, et ledit deuxième lobe de came (118) dudit arbre à cames assemblé (44) amène ledit ensemble de soupape (20, 21) à être positionné dans ladite deuxième position de soupape lorsque ledit deuxième lobe de came (118) est verrouillé dans ladite position inactive.

9. Moteur à combustion interne (10) selon la revendication 8, dans lequel l'ensemble entraîné par des cames est apte à être un ensemble de système de recirculation de gaz d'échappement (100).

10. Moteur à combustion interne (10) selon la revendication 9, dans lequel l'ensemble de système de recirculation de gaz d'échappement (100) comprend l'ensemble de soupape (20; 21), l'ensemble de soupape comprenant un boîtier de soupape (71) présentant une entrée de boîtier (66) et une sortie de boîtier (68); et
le moteur à combustion interne (10) comprend en outre:
un premier conduit (80) qui connecte ladite sortie d'échappement de moteur (14) en communication fluidique avec ladite entrée de boîtier (66); et
un deuxième conduit (82) qui connecte ladite entrée d'air de moteur (12) en communication fluidique avec ladite sortie de boîtier (68);
dans lequel l'ensemble d'interrupteur est apte à être un interrupteur de recirculation de gaz d'échappement interne; et
dans lequel des gaz d'échappement de moteur sont autorisés à avancer à partir de ladite sortie d'échappement de moteur (14) jusqu'à ladite entrée d'air de moteur (12) lorsque ledit ensemble de soupape (20, 21) est positionné dans ladite première position de soupape, et l'air est empêché d'avancer à partir de ladite entrée d'air de moteur (12) jusqu'à ladite sortie d'échappement de moteur (14) lorsque ledit ensemble de soupape (20, 21) est positionné dans ladite deuxième position de soupape.

11. Procédé de fabrication d'un arbre à cames (44) conçu pour être utilisé en communication avec un système de circulation de gaz d'échappement interne entraîné par des cames (100), comprenant les étapes suivantes:
fabriquer un arbre à cames (44) comprenant un premier élément de came (102, 114, 116) formé intégralement sur ledit arbre à cames (44) et configuré de manière à être mis en contact avec un premier poussoir de came (131);
pratiquer une fente (104) dans une surface extérieure dudit élément de came (102, 114, 116) de telle sorte que la fente (104) s'étende transversalement à un axe de rotation (110) dudit arbre à cames (44), ladite fente (104) présentant une largeur prédéterminée et une paroi de fond plate (107);
pratiquer un trou de montage (108) à l'intérieur de ladite fente (104) de telle sorte que ledit trou de montage (108) s'étende radialement à partir de la paroi de fond plate (107);
pratiquer un deuxième trou (109) qui s'étend à partir d'une circonférence extérieure dudit arbre à cames (44) jusqu'audit trou de montage (108);
rectifier ledit premier élément de came (102, 114, 116) de manière à conférer à sa surface de lobe de came la forme souhaitée;
fabriquer un deuxième élément de came séparé (118) comportant une saillie de montage (119), dans lequel ledit deuxième élément de came (118) présente une largeur qui correspond à la largeur de ladite fente (104) et que ladite saillie de montage (119) s'agence dans ledit trou de montage (108);
rectifier ledit élément de came séparé (118) de manière à conférer à sa surface de lobe de came la forme souhaitée;
insérer ledit deuxième élément de came (118) dans ladite fente (104) de telle sorte que la saillie de montage (119) soit située dans ledit trou de montage (108); et
insérer un verrou mécanique (126; 128) dans ledit deuxième trou (109) de telle sorte qu'il fixe ladite saillie de montage (119) à l'intérieur dudit trou de montage (108) de telle sorte que ledit deuxième élément de came (118) puisse être remplacé tout en étant encore positionné correctement dans sa position de fonctionnement fixe, ledit verrou mécanique (126; 128) appartenant au groupe comprenant un goujon à ressort (126), une vis sans tête (128) et une vis à tête.
